# EUROPEAN PATENT APPLICATION

(11) **EP 3 173 491 A1**
(43) Date of publication of application: **31.05.2017**
(21) Application number: 16196495.2
(22) Date of filing: 31.10.2016
(51) Int. Cl.: C13K 1/00, A23L 5/20, A23L 5/40, C13B 20/12, C13K 1/08, B01D 15/00

(54) **A REACTION TANK AND CONTINUOUS SUGAR DISSOLVING APPARATUS AND METHOD**

(30) Priority: 26.11.2015 CN 201510847761
(71) Applicant: Tetra Laval Holdings & Finance S.A., 1009 Pully (CH)
(72) Inventor: Chao, Ben, Shanghai (CN); Cui, Yi, Nan Cha, Heliongjiang (CN)
(74) Representative: Tetra Pak - Patent Attorneys SE

(57) **Abstract**

The present invention relates to a reaction tank for treating sugar syrup, a continuous sugar dissolving apparatus, and method. The reaction tank comprises a syrup inlet arranged at a bottom of the reaction tank, an adsorbent inlet arranged at the bottom of the reaction tank, and a syrup outlet arranged at an upper sidewall of the reaction tank, wherein a mesh plate arranged within the reaction tank and above the syrup inlet. The reaction tank of present invention can be used in a continuous sugar dissolving apparatus and method, and can allow for better control of the reaction time of the syrup and the adsorbent to enable coloring matter and impurities in the syrup to be removed more sufficiently.

## Description

### Technical Field of the Invention

The present invention generally relates to sugar treatment systems, and in particular to continuous sugar dissolving systems and reaction tanks used in sugar treatment systems.

### Background of the Invention

Sugar is a core ingredient in many foods and drinks. Sugar is often dissolved to a simple syrup, and the simple syrup is an essential part of the production of a variety of products such as still drinks, confectionery, jam and carbonated soft drinks. Sugar can be added and dissolved in batches, or automatically in a continuous sugar dissolving system.

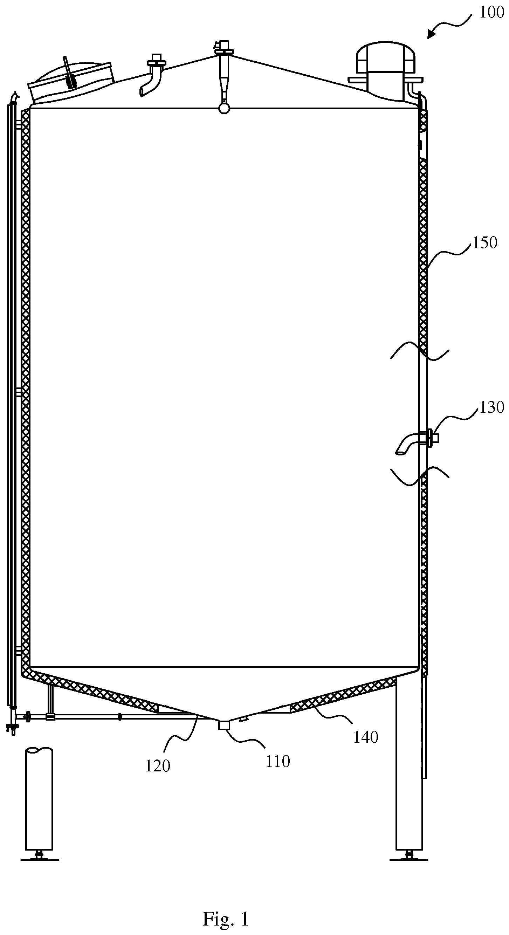

The process of dissolving sugar often involves a step to decolor a dissolved sugar syrup and/or remove impurities from the syrup before using the syrup in food or drink products. In a decoloring step and/or step to remove impurities, adsorbents having strong adsorption capacity, such as activated carbon, are commonly used to remove coloring matter and impurities from the syrup. Often, syrup is passed through a reaction tank wherein it is contacted with an adsorbent such as activated carbon. For example, Fig. 1 shows a prior art reaction tank 100. The reaction tank 100 comprises a syrup inlet 110, an adsorbent inlet 120 and an outlet 130. The syrup inlet 110 is arranged at a bottom 140 of the tank 100 and is used for syrup to be pumped into the reaction tank 100. The adsorbent inlet 120 may also be arranged at the bottom 140 and is used for adsorbent to be fed into the reaction tank 100. Processed syrup exits the reaction tank at the outlet 130 which is arranged at an upper sidewall 150 of the tank 100.

In the reaction tank as shown in Fig. 1, syrup and adsorbent are fed into the reaction tank 100 from the syrup inlet 110 and the adsorbent inlet 120 respectively by a pump. The syrup and the adsorbent interact with each other in the reaction tank 100 so that the adsorbent removes coloring matter and impurities from the syrup. With the liquid level of syrup in the reaction tank rising gradually in the tank, the processed syrup exits the tank through the outlet 130 at the upper sidewall of the tank 100.

### Summary of the Invention

It has been discovered that the prior art reaction tank has a drawback in that when pumping syrup into the reaction tank 100 from the syrup inlet, the syrup may rise straight up to the outlet 130 at the upper sidewall of the reaction tank 100 along with the inlet pressure head. As such, reaction time of the syrup entering the reaction tank cannot be adequately controlled and guaranteed, and thus effective treatment cannot be guaranteed.

Therefore, there is a need to provide an improved reaction tank to overcome the shortcomings in the existing reaction tank.

To overcome the shortcomings of existing reaction tank, the present invention provides an improved reaction tank. The reaction tank comprises a syrup inlet arranged at a bottom of the reaction tank, an adsorbent inlet arranged at the bottom of the reaction tank, a syrup outlet arranged at an upper sidewall of the reaction tank, and further comprises a mesh plate arranged within the reaction tank and at least above the syrup inlet.

By arranging a mesh plate above the syrup inlet, the syrup entering the reaction tank will first hit the mesh plate and pass through holes in the plate. Accordingly, the syrup will not go straight up with the inlet pressure head, such that the first syrup into the reaction tank is the first syrup out of the reaction tank. Thus, the reaction time of the syrup and the adsorbent (such as activated carbon) can be better controlled. Thus, coloring matter and/or impurities in the syrup can be removed more sufficiently.

The present invention also provides a method for manufacturing a reaction tank. The method comprises arranging a syrup inlet at a bottom of the reaction tank, arranging an adsorbent inlet at the bottom of the reaction tank, arranging a syrup outlet at an upper sidewall of the reaction tank, and arranging a mesh plate within the reaction tank and above the syrup inlet.

In an aspect, a continuous sugar dissolving apparatus may comprise the reaction tank according to the present invention. The continuous sugar dissolving apparatus may include a dissolving tank for dissolving sugar in water to produce sugar syrup, and means to pass the sugar syrup through the reaction tank of the present invention, and the reaction tank of the present invention.

In an aspect, the present invention further provides a method of treating sugar syrup, comprising flowing the sugar syrup through an inlet arranged at a bottom of a reaction tank; flowing an adsorbent through an inlet arranged at the bottom of the reaction tank, and draining the sugar syrup from the reaction tank via an outlet at an upper region of the reaction tank, wherein the adsorbent reacts with the sugar syrup in the reaction tank for removing color and/or impurities from the syrup, and wherein the sugar syrup enters the reaction tank below a mesh plate arranged within the reaction tank and above the syrup inlet, and passes through the mesh plate before reaching the outlet at the upper region of the reaction tank. In an aspect, the method of the present invention may be part of a continuous sugar dissolving method.

### Brief Description of the Drawings

The present invention is illustrated by way of example, and not by way of limitation, in the figures of the accompanying drawings and in which like reference numerals refer to similar elements and in which:

In the following, an exemplary reaction tank of present invention will be described in detail with reference to Figs. 2-3.
Fig. 1 depicts a schematic view of a reaction tank in prior art;
Fig. 2 depicts a schematic view of a reaction tank according to one explanatory embodiment of present invention; and
Fig. 3 depicts a schematic view of an explanatory embodiment of mesh plate used in the reaction tank as shown in Fig. 2.
Fig. 4 depicts a flow chat of manufacturing the reaction tank according to one explanatory embodiment of present invention.
Fig. 5 depicts a flow chart of a method of treating sugar syrup according to one explanatory embodiment of present invention.

### Detailed Description of the Embodiments

The present invention is illustrated by way of example, and not by way of limitation, in the figures of the accompanying drawings and in which like reference numerals refer to similar elements. In the following description, numerous specific details are set forth in order to provide a thorough understanding of the present invention. It will be apparent, however, to one skilled in the art, that the present invention may be practiced without some or all of these specific details. In other instances, well known structures have not been described in detail in order to not unnecessarily obscure the present invention.

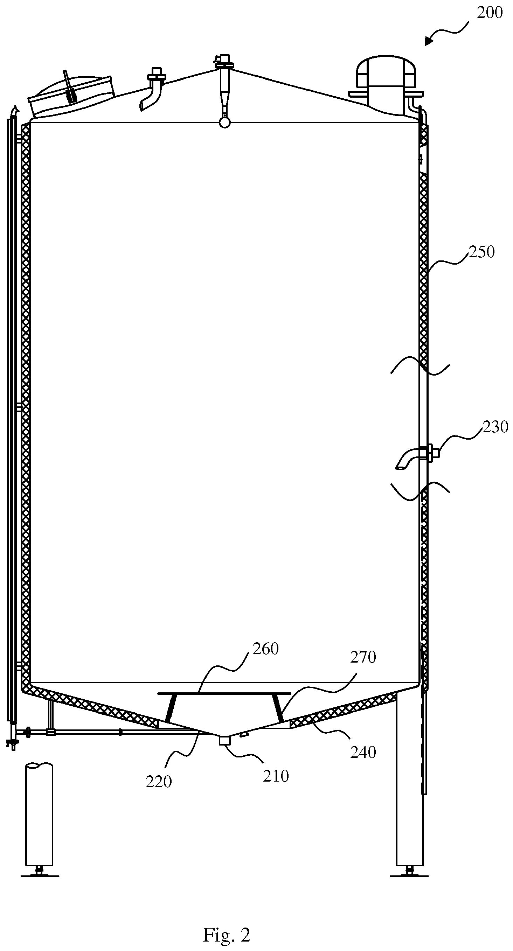

Referring to Fig. 2, there is shown a schematic view of a reaction tank 200 according to an aspect of the present invention. As shown in Fig. 2, the reaction tank 200 comprises a syrup inlet 210, an adsorbent inlet 220 and an outlet 230. The syrup inlet 210 is arranged at a bottom 240 of the tank 200 and is used for syrup to be supplied into the reaction tank 200, e.g. by pumping. The adsorbent inlet 220 is also arranged at the bottom 250 and is used for adsorbent to be fed into the reaction tank 200, e.g., by pumping. The outlet 230 is disposed at an upper sidewall 250 of the tank 200 and processed syrup exits the reaction tank through the outlet 230.

The reaction tank 200 further comprises a mesh plate 260 which is mounted within the reaction tank 200 and arranged at least above the syrup inlet 210. Preferably, the mesh plate is mounted above both the syrup inlet 210 and adsorbent inlet 220. The mesh plate can be any suitable material, but preferably is of the same material as the interior of the reaction tank, such as stainless steel.

In an aspect, the mesh plate is preferably mounted at a sufficient distance from the syrup inlet 210 so as to facilitate the syrup to enter into the reaction tank while also reducing or removing the inlet pressure head. In an aspect, the distance between the mesh plate 260 and the syrup inlet 210 may be 200mm-400mm.

In an aspect, the mesh plate is mounted at the inner side of the bottom 240 by one or more supporting members 270. The connection between the mesh plate and the supporting members, and the connection between the supporting members and the bottom of the tank can be bolt fastening, welding or other appropriate connection types.

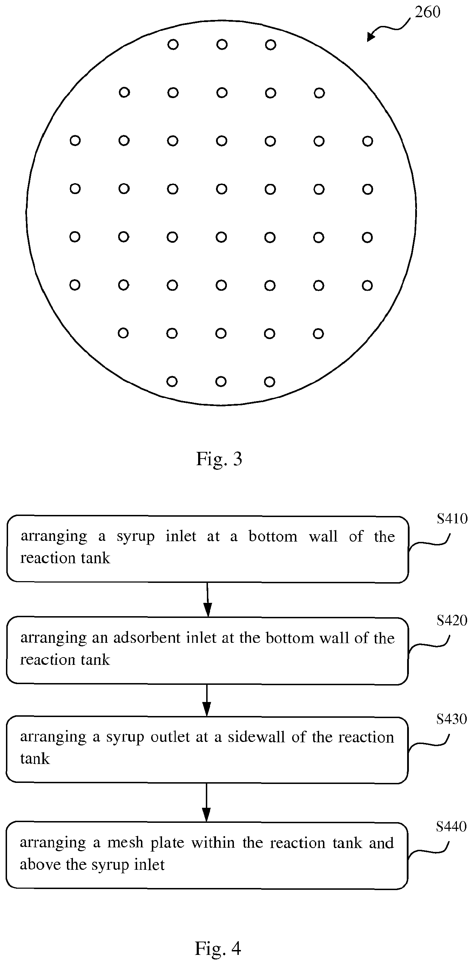

Fig. 3 shows an exemplary embodiment of a mesh plate 260. As shown in Fig. 3, the mesh plate 260 comprises a plurality of through holes therein which syrup may pass through. In an aspect, the through holes may be from 2mm-6mm in diameter. Although the mesh plate 260 shown in Fig. 3 is circular, the mesh plate also can be any other appropriate shape such as rectangular, triangular, polygonal, etc..

The present invention also provides a method for manufacture the reaction tank. Fig. 4 shows a flow chart of manufacturing the reaction tank of present invention according to an explanatory embodiment. The method comprises the following steps: In step 410, arranging a syrup inlet at a bottom of the reaction tank; in step 420, arranging an adsorbent inlet at the bottom of the reaction tank; in step 430, arranging a syrup outlet at an upper sidewall of the reaction tank; and in step 440, arranging a mesh plate within the reaction tank and above the syrup inlet.

By mounting a mesh plate above at least the syrup inlet, when the syrup is pumped into the reaction tank from the syrup inlet, the incoming syrup will first hit the mesh plate and pass through the holes in the mesh plate. Thus, the syrup will not go straight up to the upper outlet 230 with the inlet pressure head, and first syrup-in, first syrup-out is realized. Therefore, the reaction time of the syrup and the adsorbent (such as activated carbon) is better controlled. Thus, coloring matter and/or impurities in the syrup can be removed more sufficiently. When the syrup reaches the upper outlet 230 at the sidewall of the reaction tank, the syrup having been sufficiently treated exits from the upper outlet 230.

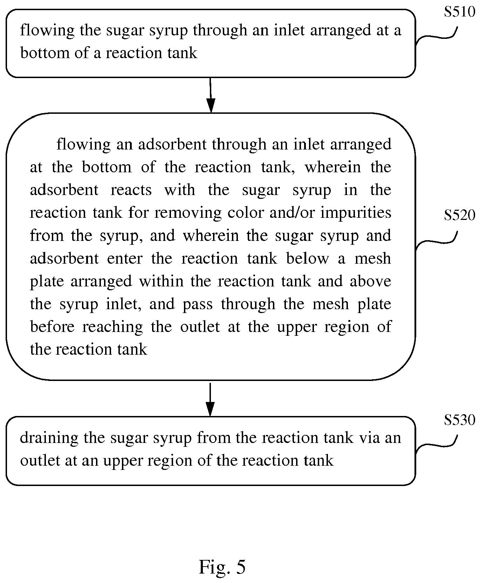

Fig. 5 shows an exemplary embodiment of a method of treating sugar using the reaction tank of the present invention. The reaction tank may be part of a continuous dissolving apparatus, wherein the reaction tank receives dissolved sugar syrup from a dissolving tank. The method of treating sugar syrup comprises flowing the sugar syrup through an inlet arranged at a bottom of the reaction tank of the present invention in Step S510; flowing an adsorbent through an inlet arranged at the bottom of the reaction tank in Step S520, and draining the sugar syrup from the reaction tank via an outlet at an upper region of the reaction tank in Step S530, wherein the adsorbent reacts with the sugar syrup in the reaction tank for removing color and/or impurities from the syrup, and wherein the sugar syrup enters the reaction tank below a mesh plate arranged within the reaction tank and above the syrup inlet, and passes through the mesh plate before reaching the outlet at the upper region of the reaction tank. In an aspect, the adsorbent may also enter the reaction tank below the mesh plate arranged within the reaction tank. In an aspect, the method of the present invention may be part of a continuous sugar dissolving method.

It will be apparent to those skilled in the art that various modifications and variations can be made to the embodiments described herein without departing from the spirit and scope of the claimed subject matter. Thus, it is intended that the specification covers modifications and variations of the various embodiments described herein, provided such modification and variations come within the scope of the appended claims and their equivalents.

## Claims

**1.** A reaction tank, comprising:
a syrup inlet arranged at a bottom of the reaction tank;
an adsorbent inlet arranged at the bottom of the reaction tank; and
a syrup outlet arranged at an upper sidewall of the reaction tank; wherein
a mesh plate is arranged within the reaction tank and above the syrup inlet.

**2.** The reaction tank of claim 1, wherein the mesh plate is arranged above the adsorbent inlet.

**3.** The reaction tank of claim 2, wherein the distance between the mesh plate and the syrup inlet is 200mm to 400mm.

**4.** The reaction tank of any one of claims 1-3, wherein the mesh plate has a plurality of through holes therein, wherein the diameter of each of the through holes is between 2mm to 6mm.

**5.** A continuous sugar dissolving apparatus comprising a sugar dissolving tank and the reaction tank of any one of the preceding claims.

**6.** A method of treating sugar syrup, comprising flowing the sugar syrup through an inlet arranged at a bottom of a reaction tank; flowing an adsorbent through an inlet arranged at the bottom of the reaction tank, and draining the sugar syrup from the reaction tank via an outlet at an upper region of the reaction tank, wherein the adsorbent reacts with the sugar syrup in the reaction tank for removing color and/or impurities from the syrup, and wherein the sugar syrup enters the reaction tank below a mesh plate arranged within the reaction tank and above the syrup inlet, and passes through the mesh plate before reaching the outlet at the upper region of the reaction tank.

**8.** A method for manufacturing a reaction tank, comprising:
arranging a syrup inlet at a bottom of the reaction tank;
arranging an adsorbent inlet at the bottom of the reaction tank;
arranging a syrup outlet at an upper sidewall of the reaction tank; and
arranging a mesh plate within the reaction tank and above the syrup inlet.

**9.** The method of claim 8, wherein the mesh plate is mounted at an inner wall of the bottom by one or more supporting members.

**10.** The method of claim 9, wherein the mesh plate is connected with the supporting member by welding and the supporting member is connected with the inner wall of the bottom by welding.

**11.** The method tank of any one of claims 8-10, wherein the distance between the mesh plate and the syrup inlet is between 200mm and 400mm.

**12.** The method of any one of claims 8-10, wherein the mesh plate has a plurality of through holes therein, wherein the diameter of each of the through holes is between 2mm and 6mm.

**13.** The method of 11, wherein the mesh plate has a plurality of through holes therein, wherein the diameter of each of the through holes is between 2mm and 6mm.
